# EUROPÄISCHE PATENTANMELDUNG

(11) **EP 2 181 954 A2**
(43) Veröffentlichungstag der Anmeldung: **05.05.2010**
(21) Anmeldenummer: 09012491.8
(22) Anmeldetag: 02.10.2009
(51) Int. Cl.: B65H 67/06

(54) **Palettenstellvorrichtung**

(30) Priorität: 04.11.2008 DE 102008055847
(71) Anmelder: Oerlikon Textile GmbH & Co. KG, 42897 Remscheid (DE)
(72) Erfinder: Göbbels, Heinz-Dieter, 41179 Mönchengladbach (DE); Reiners, Heinzbert, Waxhaw, NC 28173 (US)
(74) Vertreter: Hamann, Arndt

(57) **Zusammenfassung**

Die Erfindung betrifft eine Palettenstellvorrichtung für eine Kreuzspulen herstellende Textilmaschine, auf der gleichzeitig Kreuzspulen unterschiedlicher Garnpartien herstellbar sind, insbesondere zum Bevorraten von mehreren Transportpaletten, die jeweils mit Kreuzspulen nur einer der Garnpartien beladen werden.

Erfindungsgemäß ist vorgesehen, dass die Palettenstellvorrichtung (2) als Drehtisch (4) ausgebildet ist und wenigstens zwei Palettenstellplätze (5A, 5B) aufweist, die jeweils so positionierbar sind, dass die beim Beladen der Transportpaletten (3B, 3B) anfallenden Transportwege auf ein Minimum reduziert sind.

## Beschreibung

Die Erfindung betrifft eine Palettenstellvorrichtung für eine Kreuzspulen herstellende Textilmaschine gemäß dem Oberbegriff des Anspruchs 1.

Im Zusammenhang mit Kreuzspulen herstellenden Textilmaschinen ist es seit langem üblich, die fertig gestellten Kreuzspulen manuell von der Textilmaschine abzunehmen und zum Weitertransport auf bereitgestellte Transportpaletten zu verladen.

Es ist des Weiteren auch bekannt, die fertig gestellten Kreuzspulen durch maschinenendseitig angeordnete Handhabungsgeräte maschinell aufzunehmen und zum Weitertransport in entsprechenden Transportbehältern zu stapeln.

Kreuzspulen herstellende Textilmaschinen, die mit automatischen Handhabungsgeräten ausgestattet sind, sind beispielsweise in der DE 37 14 057 A1 oder in der DE 43 41 925 A1 beschrieben.
Diese bekannten automatischen Handhabungs- oder Palettiergeräte weisen vorzugsweise zum Aufnehmen und Stapeln der Kreuzspulen Greifer auf, die sowohl in horizontalen Ebenen als auch in vertikalen Ebenen verschiebbar sind.

Nachteilig bei diesen automatischen Handhabungs- oder Palettiergeräten ist allerdings deren relativ komplizierter Aufbau sowie die zugehörige komplexe und verhältnismäßig empfindliche Steuerung. Außerdem sind solche automatischen Handhabungs- oder Palettiergeräte in der Regel in der Anschaffung verhältnismäßig kostenintensiv.

In so genannten Niedriglohn-Ländern ist es daher nach wie vor weit verbreitet, die auf Kreuzspulen herstellenden Textilmaschinen gefertigten Kreuzspulen nach ihrer Fertigstellung manuell zu verladen.
Das heißt, die fertig gestellten Kreuzspulen werden von einer Bedienperson jeweils von Hand vom Kreuzspulentransportband der Textilmaschine genommen und auf eine Transportpalette gestellt, die im Bereich des Maschinenendgestells der betreffenden Textilmaschine positioniert ist.

Das manuelle Abräumen von Kreuzspulen ist allerdings insbesondere dann zeitaufwendig, arbeitsintensiv und auch etwas umständlich, wenn auf einer Kreuzspulen herstellenden Textilmaschine gleichzeitig Kreuzspulen unterschiedlicher Garnpartien hergestellt werden, die jeweils auf einer zugehörigen Transportpalette abgesetzt werden müssen.

Da das Platzangebot im Bereich der Maschinenendgestelle von Kreuzspulen herstellenden Textilmaschinen, die üblicherweise in einem Spinnmaschinensaal in Reihe nebeneinander angeordnet sind, relativ begrenzt ist, können, wenn die Textilmaschine beispielsweise im 4-Partienbetrieb arbeitet, die vier benötigten Transportpaletten nicht mehr so positioniert werden, dass die Transportwege des Bedienpersonals beim Abräumen der Kreuzspulen zu allen vier Transportpaletten optimal, das heißt, möglichst gleich kurz sind.
In der Praxis werden die Transportpaletten aus Platzmangel beispielsweise halbkreisförmig angeordnet, mit der Folge, dass die Transportwege zu den seitlich angeordneten Transportpaletten deutlich länger sind als die Transportwege zu den direkt am Maschinenendgestell positionierten Transportpaletten.

Auch andere bekannte Aufstellungsvarianten für die Transportpaletten weisen bei einem Mehrpartienbetrieb einer Kreuzspulen herstellenden Textilmaschine deutliche Nachteile auf. So kann beispielsweise auch durch eine Anordnung von vier Transportpaletten in zwei parallelen, durch einen schmalen Laufweg getrennten Reihen das Problem unterschiedlich langer Transportwege beim Beladen der verschiedenen Transportpaletten nicht gelöst werden.
Außerdem weist eine solche Anordnung der Transportpaletten zusätzlich den Nachteil auf, dass zumindest die direkt am Maschinenendgestell positionierten Transportpaletten im Bedarfsfall schlecht zugängig sind und nur ausgetauscht werden können, wenn vorher wenigstens eine der anderen Transportpaletten zur Seite geräumt wurde.

Ausgehend vom vorgenannten Stand der Technik liegt der Erfindung die Aufgabe zugrunde, eine kostengünstige Vorrichtung zu entwickeln, die eine gut zugängige Positionierung mehrerer Transportpaletten derart ermöglicht, dass auch bei einem Mehrpartienbetrieb einer Textilmaschine eine problemlose und rationelle, manuelle Ablage der fertig gestellten Kreuzspulen gewährleistet ist.

Diese Aufgabe wird erfindungsgemäß durch eine Palettenstellvorrichtung gelöst, die die im Anspruch 1 beschriebenen Merkmale aufweist.

Vorteilhafte Ausgestaltungen der Erfindung sind Gegenstand der Unteransprüche.

Die erfindungsgemäße Ausbildung einer Palettenstellvorrichtung als Drehtisch mit wenigstens zwei Palettenstellplätzen, die jeweils so positionierbar sind, dass die beim Abräumen der Kreuzspulen herstellenden Textilmaschine bzw. beim Beladen der Transportpaletten anfallenden Transportwege auf ein Minimum reduziert sind, hat den Vorteil, dass einerseits das manuelle Abräumen der Textilmaschine, insbesondere bei einem Mehrpartienbetrieb der Kreuzspulen herstellenden Textilmaschine, erheblich erleichtert und anderseits die Zeitspanne, die zum Abräumen der Textilmaschine benötigt wird, deutlich verkürzt wird. Das heißt, die Palettenstellplätze des Drehtisches können beim Beladen der Transportpaletten jeweils so optimal positioniert werden, dass zwischen der Kreuzspulenentnahmestelle an der Textilmaschine und den Transportpaletten stets der kürzeste Transportweg gewährleistet ist, was sich nicht nur positiv auf die Dauer der Entladung der Textilmaschine bzw. auf das Beladen der Transportpaletten auswirkt, sondern auch zu einer Entlastung des Bedienpersonals führt.
Eine als Drehtisch ausgebildete Palettenstellvorrichtung stellt außerdem eine kompakte, robuste Konstruktion mit relativ geringem Platzbedarf dar.

Wie im Anspruch 2 dargelegt, weist der Drehtisch, der, wie vorstehend bereits erwähnt, in unmittelbarer Nähe des Maschinenendgestells der Textilmaschine positioniert ist, in vorteilhafter Ausführungsform vier rotationssymmetrisch angeordnete Palettenstellplätze auf, die jeweils bedarfsgerecht positionierbar sind.
Eine solche Ausbildung ermöglicht durch Minimierung der Transportwege nicht nur ein vorteilhaftes Entladen von Kreuzspulen herstellenden Textilmaschinen, auf denen gleichzeitig bis zu vier unterschiedliche Garnpartien hergestellt werden, sondern gewährleistet bei geringstem Platzbedarf auch jederzeit eine gute Zugängigkeit zu den verschiedenen Transportpaletten.
Das heißt, bei Bedarf kann jede der Transportpaletten problemlos so positioniert werden, dass sie, zum Beispiel durch einen so genannten Hubwagen, auf einfache Weise ausgetauscht werden kann.

Die Palettenstellplätze werden, wie im Anspruch 3 beschrieben, in vorteilhafter Ausführungsform jeweils durch mehrere identische, miteinander verbundene Auflagebleche gebildet, die zusätzlich über eine zentrale Trägerplatte verbunden sind. Über die zentrale Trägerplatte sind die Auflagebleche an eine Antriebsglocke angeschlossen, die drehbar auf einer mittig angeordneten Lagerachse abgestützt ist.
Die Verwendung identischer, miteinander verbundener Auflagebleche, die über eine zentrale Trägerplatte verbunden sind, ermöglicht eine einfache und kostengünstige Fertigung eines stabilen Palettenaufnahmetisches.

Wie im Anspruch 4 beschrieben, ist in vorteilhafter Ausführungsform vorgesehen, dass die Auflagebleche des Palettenaufnahmetisches auf ihrer Unterseite mit Rollelementen ausgestattet sind, die sich auf einer Bodenplatte abstützen, die ihrerseits auf dem Hallenboden festgelegt ist.
Die Rollenelemente bilden dabei kostengünstige und zuverlässige Führungselemente für die Auflagebleche, die verhindern, dass sich die Auflagebleche unter der Last beladener Transportpaletten verziehen, d.h. verbiegen und auf dem Bodenblech schleifen können. Durch die Rollenelemente ist folglich auf einfache Weise sichergestellt, dass der Palettenstellvorrichtung unter allen Beladungszuständen stets voll funktionsfähig bleibt.

Wie in den Ansprüchen 5 - 10 des Weiteren beschrieben, kommt als Drehtischantrieb vorzugsweise eine Schubkolbengetriebeeinheit zum Einsatz, die über einen so genannten Zahnrad-Klinken-Freilauf mit der Antriebsglocke und damit mit den die Palettenstellplätze bildenden Auflageblechen verbunden ist.

Die Schubkolbengetriebeeinheit ist, wie im Anspruch 5 erläutert, platzsparend unterhalb der zentralen Trägerplatte angeordnet und korrespondiert mit einem als Zahnkranz ausgebildeten Widerlagerelement, das an der drehbar gelagerten Antriebsglocke festgelegt ist.

Gemäß Anspruch 6 weist die Schubkolbengetriebeeinheit in bevorzugter Ausführungsform mehrere Pneumatikzylinder auf, deren Kolbenstangen jeweils über ein Klinkenwerk so an den an der Antriebsglocke festgelegten Zahnkranz angeschlossen sind, dass die Antriebsglocke und damit der Drehtisch beim Einfahren der Kolbenstangen im Sinne "schwenken" beaufschlagt wird.
Durch die Verlagerung der Arbeitslast in den Rückhub der Pneumatikzylinder werden einseitige Belastungen der Dichtungen der Pneumatikzylinder weitestgehend vermieden, was sich insgesamt positiv auf die Lebensdauer der Pneumatikzylinder auswirkt.

Das Klinkenwerk weist ein an der Lagerachse drehbar gelagertes Antriebsrohr sowie eine Hebeleinheit auf, die mit dem Antriebsrohr drehfest verbunden ist (Anspr.7).
Wie im Anspruch 8 des Weiteren dargelegt ist, verfügt die Hebeleinheit an jedem ihrer Hebelarme über erste, zweite und dritte Lagerbolzen.

An den ersten Lagerbolzen ist schwenkbar und durch ein Federelement beaufschlagt, das sich an einem der zweiten Lagerbolzen abstützt, jeweils eine Sperrklinke gelagert, während an den dritten Lagerbolzen jeweils die Kolbenstange eines der Pneumatikzylinder angelenkt ist.
Ein solchermaßen ausgebildetes Klinkenwerk weist gegenüber bekannten Freilaufeinrichtungen einerseits den Vorteil einer relativ geringen Bauhöhe auf und kann vor allem nahezu schmierstofflos betrieben werden.
Ein solcher schmierstoffloser Betrieb ist insbesondere angesichts der in Spinnereien herrschenden schwierigen Verhältnisse (Faserflug, staubbeladene Luft etc.) sehr vorteilhaft, da die Reinigungen eines solchen Klinkenwerkes erheblich leichter und einfacher ist.

Die Pneumatikzylinder sind vorzugsweise, wie im Anspruch 9 beschrieben, als Flachzylinder ausgebildet, die mit ihrem Zylindergehäuse über eine Stützkonstruktion an die Bodenplatte der Palettenstellvorrichtung angeschlossen sind.
Durch den Einsatz solcher Flachzylinder kann die Bauhöhe der erfindungsgemäßen Palettenstellvorrichtung relativ gering gehalten werden, das heißt, die Palettenstellplätze sind so angeordnet, dass ein Hubwagen mit seinen Transportgabeln problemlos unter die Transportpaletten gefahren werden kann und anschließend die Transportpaletten anheben und abtransportieren kann.

Gemäß Anspruch 10 ist außerdem vorgesehen, dass die Pneumatikzylinder an eine Druckluftquelle angeschlossen und durch Betätigung eines gemeinsamen Ventilelementes definiert ansteuerbar sind.

Derartig ausgebildete Steuereinrichtungen sind kostengünstig, nahezu wartungsfrei und arbeiten sehr zuverlässig.
Weitere Einzelheiten der Erfindung sind einem nachfolgend anhand der Zeichnungen dargestellten Ausführungsbeispiels entnehmbar.

### Es zeigt:

- Fig.1: schematisch in Draufsicht einen Spinnsaal mit einigen Offenend-Rotorspinnmaschinen sowie maschinenendseitig dieser Textilmaschinen Palettenstellvorrichtungen, die jeweils vier Palettenstellplätze aufweisen,
- Fig.2: eine Draufsicht auf eine erfindungsgemäße, als Drehteller ausgebildete Palettenstellvorrichtung, wobei der Drehtellerantrieb lediglich schematisch angedeutet ist,
- Fig.3: den Drehtellerantrieb im Detail und in einem größeren Maßstab,
- Fig.4: den Zahnrad-Klinken-Freilauf des Drehtellerantriebs,
- Fig.5: die zentrale Lagerung der Palettenstellvorrichtung im Schnitt.

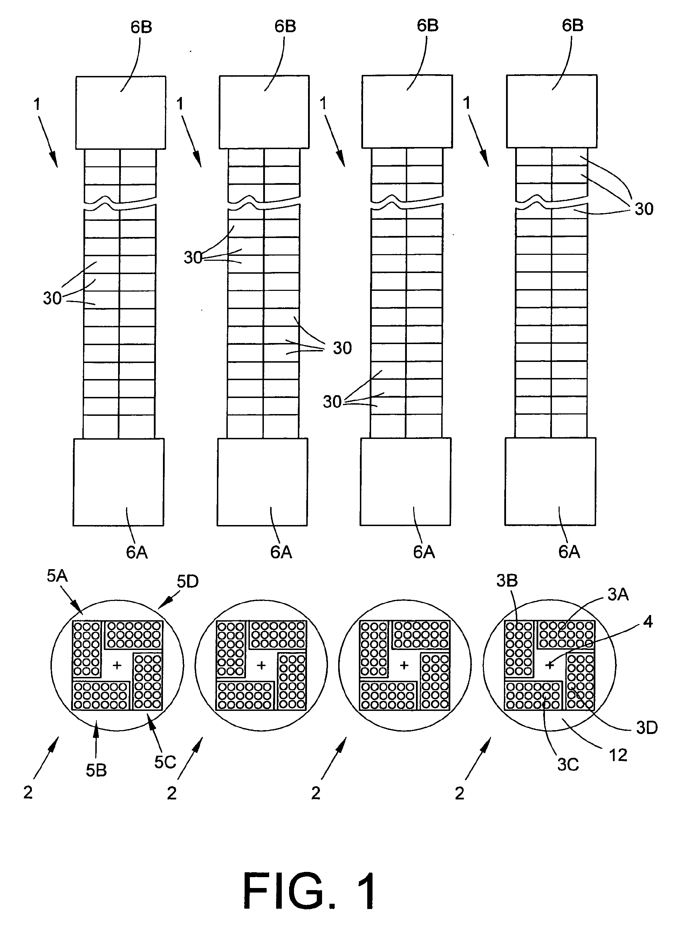

Die Fig.1 zeigt schematisch in Draufsicht einen Spinnsaal mit vier in Reihe nebeneinander angeordneten Textilmaschinen, die jeweils zwischen ihren Endgestellen 6A und 6B eine Vielzahl von identischen Arbeitsstellen 30 aufweisen.
Auf den Arbeitsstellen 30 der Textilmaschinen, im vorliegenden Ausführungsbeispiel Offenend-Rotorspinnmaschinen 1, werden aus Faserbändern, die in so genannten Spinnkannen vorgelegt werden, Kreuzspulen gefertigt.
Die Arbeitsweise der Arbeitsstellen solcher Offenend-Rotorspinnmaschinen ist allgemein bekannt und wird daher nicht weiter erläutert.

Im dargestellten Ausführungsbeispiel werden auf jeder der Offenend-Rotorspinnmaschinen 1 gleichzeitig jeweils vier verschiedene Arten von Kreuzspulen hergestellt, das heißt, die Textilmaschinen arbeiten jeweils in einem so genannten 4-Partienbetrieb.

Die auf den Arbeitsstellen 30 fertig gestellten Kreuzspulen jeder Textilmaschine werden zur Weiterverarbeitung, geordnet nach Garnpartien, auf Transportpaletten 3a, 3B, 3c bzw. 3D gestapelt, die maschinenendseitig jeweils auf einer erfindungsgemäßen Palettenstellvorrichtung 2 angeordnet sind.

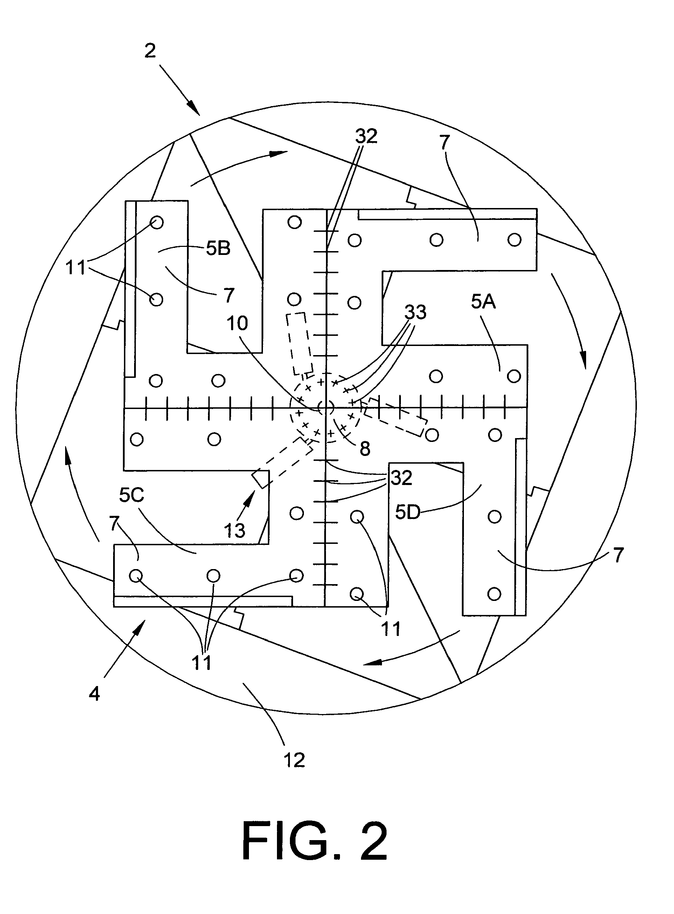

Wie nachfolgend anhand der Figuren 2 - 5 näher erläutert, sind die Palettenstellvorrichtungen 2 jeweils als Drehtische 4 mit vorzugsweise bis zu vier Palettenstellplätzen 5A - 5D ausgebildet.

Wie insbesondere in Fig.2 dargestellt, besteht jede der Palettenstellvorrichtungen 2 aus vier, vorzugsweise identisch ausgebildeten Auflageblechen 7, die untereinander über Schraubenbolzen 32 verbunden sowie über Schraubenbolzen 33 an eine zentrale Trägerplatte 8 angeschlossen sind.
Die Auflagebleche 7 weisen auf ihrer Unterseite Rollenelemente 11 auf, die sich auf einer Bodenplatte 12 abstützen, die vorzugsweise aus zahlreichen Einzelsegmenten zusammengesetzt ist.

Die zentrale Trägerplatte 8 ist ihrerseits an einer Antriebsglocke 9 festgelegt, die drehbar auf einer zentralen Lagerachse 10 abgestützt ist.

Wie in Fig.2 dargestellt, bilden die Auflagebleche 7 im Montagezustand einen Drehtisch 4 mit Palettenstellplätzen 5A - 5D.
Als Drehtischantrieb ist eine Schubkolbengetriebeeinheit 13 vorgesehen, die im Wesentlichen drei Schubkolbengetriebe 15A - 15C sowie ein Klinkenwerk 17 umfasst.

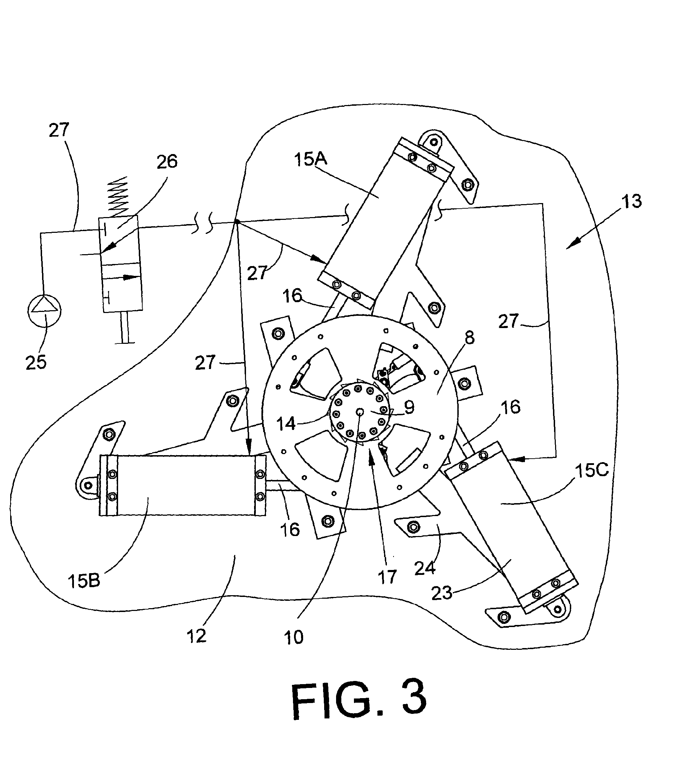

Wie in Fig.3 dargestellt, sind die Schubkolbengetriebe 15A, 15B, 15A über Druckluftleitungen 27 an eine Druckluftquelle 25 angeschlossen und können über ein Wegeventil 26 gleichzeitig definiert angesteuert werden.
Die Schubkolbengetriebe 15A - 15C, die mit ihrem Zylindergehäuse 23 jeweils über eine Stützkonstruktion 24 begrenzt beweglich an der Bodenplatte 12 abgestützt sind, sind mit ihren Schubkolbenstangen 16 so an das Klinkenwerk 17 angeschlossen, dass der Drehtisch 4 beim Einfahren der Kolbenstangen 16 weiter getaktet, das heißt, im Uhrzeigersinn um einen Palettenstellplatz weiter geschwenkt wird.

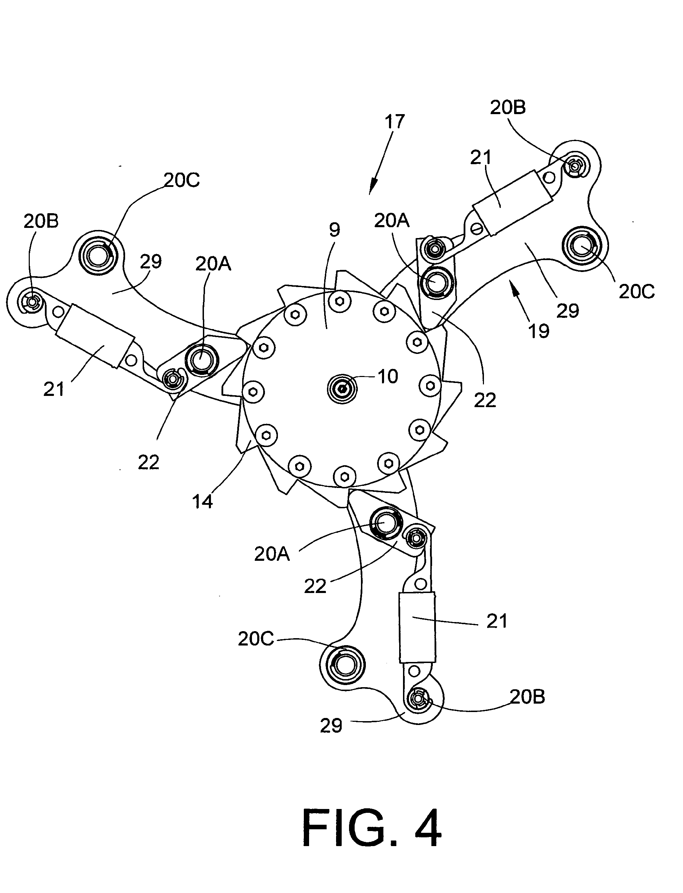

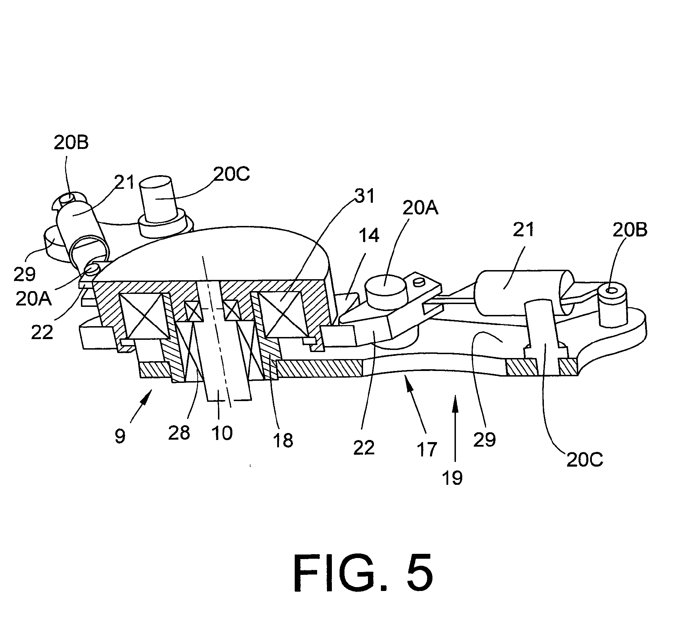

Das Klinkenwerk 17 verfügt, wie aus den Figuren 4 bzw. 5 ersichtlich, über eine Hebeleinheit 19, die drehfest an einem Antriebsrohr 18 festgelegt ist, welches seinerseits, beispielsweise über Wälzlager 28, rotierbar auf der zentralen Lagerachse 10 gelagert ist.

Die Hebeleinheit 19 weist drei Lagerarme 29 auf, die jeweils mit drei Lagerbolzen 20A, 20B, 20C ausgestattet sind.

An den ersten Lagerbolzen 20A ist jeweils eine Sperrklinke 22 beweglich gelagert, die durch ein Federelement 21, das sich an einem der zweiten Lagerbolzen 20B abstützt, an einen Zahnkranz 14 gedrückt wird, wobei der Zahnkranz 14 seinerseits drehfest an der Antriebsglocke 9 befestigt ist.
An die dritten Lagerbolzen 20C ist jeweils die Kolbenstange 16 eines der Schubkolbengetriebe 15A - 15C angelenkt.
Die Antriebsglocke 9, an der, wie vorstehend bereits erläutert, über eine zentrale Trägerplatte 8 die Auflagebleche 7 der Palettenstellplätze 5A - 5D festgelegt sind, ist ihrerseits, beispielsweise über ein Pendelrollenlager 31, drehbar auf dem Antriebsrohr 18 des Klinkenwerkes 17 angeordnet.

### Funktion der erfindungsgemäßen Palettenstellvorrichtung:

Zum Ändern bzw. zum Einstellen einer Position eines Palettenstellplatzes 5A, 5B, 5C oder 5D der Palettenstellvorrichtung 2 werden die Schubkolbengetriebe 15A - 15C im Sinne "Einfahren der Kolbenstangen" angesteuert.
Die einfahrenden Kolbenstangen 16 der Schubkolbengetriebe 15A - 15C schwenken daraufhin die über das Antriebsrohr 18 sowie Wälzlager 28 drehbar auf der zentralen Lagerachse 10 gelagerte Hebeleinheit 19 im Uhrzeigersinn.

Das heißt, die an den Hebelarmen der Hebeleinheit 19 begrenzt beweglich gelagerten Sperrklinken 22 sind durch die Federelemente 21 derart im Zahnkranzes 14 des Klinkenwerkes 17 fixiert, dass bei einer Bewegung der Hebeleinheit 19 im Uhrzeigersinn zwischen den Sperrklinken 22 und dem Zahnkranz 14 drehfeste Verbindungen gegeben sind.

Diese drehfesten Verbindungen sorgen dafür, dass beim Einfahren der Kolbenstangen 16 der Schubkolbengetriebe 15A - 15C der Zahnkranz 14 und damit auch die mit dem Zahnkranz 14 drehfest verbundene Antriebsglocke 9 im Uhrzeigersinn mitgenommen wird.
Da an der Antriebsglocke 9 die durch die Auflagebleche 7 sowie eine zentrale Trägerplatte 8 gebildeten Palettenstellplätze 5A - 5D festgelegt sind, werden bei jedem derartigen Arbeitstakt der Schubkolbengetriebe 15A - 15C auch die Palettenstellplätze 5A - 5D jeweils um einen Arbeitstakt weitergeschaltet.

Beim Ausfahren der Kolbenstangen 16 der Schubkolbengetriebe 15A - 15C wird die drehbar gelagerte Hebeleinheit 19 im Gegenuhrzeigersinn geschwenkt.
Die an der Hebeleinheit 19 begrenzt beweglich angeordneten Sperrklinken 22 gleiten dabei, trotz Beaufschlagung durch die Federelemente 21, über die Zahnrücken der Zähne des Zahnkranzes 14 mit der Folge, dass auf den Zahnkranz 14 und damit auf die Antriebsglocke 9 kein Drehmoment übertragen wird.
Das heißt, beim Ausfahren der Kolbenstangen 16 der Schubkolbengetriebe 15A - 15C bleibt die Antriebsglocke 9 in ihrer Ausgangslage.

## Patentansprüche

1. Palettenstellvorrichtung für eine Kreuzspulen herstellende Textilmaschine, auf der gleichzeitig Kreuzspulen unterschiedlicher Garnpartien herstellbar sind, insbesondere zum Bevorraten von mehreren Transportpaletten, die jeweils mit Kreuzspulen nur einer der Garnpartien beladen werden,
**dadurch gekennzeichnet,**
**dass** die Palettenstellvorrichtung (2) als Drehtisch (4) ausgebildet ist und wenigstens zwei Palettenstellplätze (5A, 5B) aufweist, die jeweils so positionierbar sind, dass die beim Beladen der Transportpaletten (3B, 3B) anfallenden Transportwege auf ein Minimum reduziert sind.

2. Palettenstellvorrichtung nach Anspruch 1, **dadurch gekennzeichnet, dass** der Drehtisch (4) im Bereich eines Maschinenendgestells (6) der Textilmaschine (1) angeordnet ist und vier rotationssymmetrisch angeordnete, definiert positionierbare Palettenstellplätze (5A, 5B, 5C, 5D) aufweist.

3. Palettenstellvorrichtung nach Anspruch 1 oder 2, **dadurch gekennzeichnet, dass** die Palettenstellplätze (5A, 5B, 5C, 5D) jeweils durch identische, miteinander verbundene Auflagebleche (7) gebildet werden, die über eine zentrale Trägerplatte (8) sowie eine Antriebsglocke (9) drehbar auf einer Lagerachse (10) abgestützt sind.

4. Palettenstellvorrichtung nach Anspruch 3, **dadurch gekennzeichnet, dass** die Auflagebleche (7) auf ihrer Unterseite mit Rollelementen (11) ausgestattet sind, die sich auf einer Bodenplatte (12) abstützen.

5. Palettenstellvorrichtung nach einem der vorherigen Ansprüche, **dadurch gekennzeichnet, dass** als Drehtischantrieb eine Schubkolbengetriebeeinheit (13) installiert ist, die mit einem als Zahnkranz (14) ausgebildeten Widerlagerelement korrespondiert, das an der drehbar gelagerten Antriebsglocke (9) festgelegt ist.

6. Palettenstellvorrichtung nach Anspruch 5, **dadurch gekennzeichnet, dass** die Schubkolbengetriebeeinheit (13) mehrere Pneumatikzylinder (15A, 15B, 15C) aufweist, deren Kolbenstangen (16) jeweils über ein Klinkenwerk (17) so an den an der Antriebsglocke (9) festgelegten Zahnkranz (14) angeschlossen sind, dass beim Einfahren der Kolbenstangen (16) der Zahnkranz (14) und damit der Drehtisch (4) im Sinne "schwenken" beaufschlagt wird.

7. Palettenstellvorrichtung nach Anspruch 6, **dadurch gekennzeichnet, dass** das Klinkenwerk (17) ein an der Lagerachse (10) drehbar gelagertes Antriebsrohr (18) und eine am Antriebsrohr (18) drehfest angeordnete Hebeleinheit (19) aufweist.

8. Palettenstellvorrichtung nach Anspruch 7, **dadurch gekennzeichnet, dass** die Hebeleinheit (19) erste, zweite und dritte Lagerbolzen (20A, 20B, 20C) aufweist, wobei an den ersten Lagerbolzen (20A) schwenkbar und durch ein Federelement (21) beaufschlagt, das sich an einem der zweiten Lagerbolzen (20B) abstützt, jeweils eine Sperrklinke (22) gelagert ist, und an den dritten Lagerbolzen (20C) jeweils die Kolbenstange (16) eines der Pneumatikzylinder (15A, 15B, 15C) angelenkt ist.

9. Palettenstellvorrichtung nach einem der vorherigen Ansprüche, **dadurch gekennzeichnet, dass** die Pneumatikzylinder (15A, 15B, 15C) als Flachzylinder ausgebildet und mit ihrem Zylindergehäuse (23) über eine Stützkonstruktion (23) begrenzt beweglich an die Bodenplatte (12) angeschlossen sind.

10. Palettenstellvorrichtung nach Anspruch 9, **dadurch gekennzeichnet, dass** die Pneumatikzylinder (15A, 15B, 15C) an eine Druckluftquelle (25) angeschlossen und durch Betätigung eines gemeinsamen Ventilelementes (26) definiert ansteuerbar sind.
